# EUROPEAN PATENT APPLICATION

(11) **EP 4 012 594 A1**
(43) Date of publication of application: **15.06.2022**
(21) Application number: 21212127.1
(22) Date of filing: 02.12.2021
(51) Int. Cl.: G06F 21/86

(54) **SCREW REMOVAL DETECTION TO DETERMINE DEVICE TAMPERING**

(30) Priority: 08.12.2020 US 202017115748
(71) Applicant: Lenovo (Singapore) Pte. Ltd., New Tech Park 556741 (SG)
(72) Inventor: RINGUETTE, Justin Michael, MORRISVILLE, 27560 NC (US); NORTON, Robert James, Raleigh, 27606 NC (US); COLLINS, Sandy Scott, Durham, 27704 NC (US)
(74) Representative: Openshaw & Co.

(57) **Abstract**

In one aspect, a device includes at least one processor, an electrical circuit that includes a screw forming part of the circuit, and storage accessible to the at least one processor. The storage includes instructions executable by the at least one processor to determine that the screw has been removed from the circuit and to take at least one action at the device to indicate device tampering based on the determination.

## Description

### FIELD

The present application relates to technically inventive, non-routine solutions that are necessarily rooted in computer technology and that produce concrete technical improvements.

### BACKGROUND

As recognized herein, hackers and other people with nefarious intent might seek to physically gain access to sensitive parts of a computing device to gain access to sensitive data and hardware components to which they might not otherwise have access. This can create security issues as it can often lead to the sensitive or protected data being compromised or hardware technology being stolen. As also recognized herein, current solutions are inadequate as they often involve adding additional hardware to the device that takes up significant and valuable space within the device that could be devoted to other components. Even then, the additional hardware can undesirably drain the device's battery, be manipulated to make it appear as though the device was not tampered with at all, might wear-out over time, and/or can add significantly to the overall production cost of the device. Accordingly, there are currently no adequate solutions to the foregoing computer-related, technological problem.

### SUMMARY

Accordingly, in one aspect a device includes at least one processor, a circuit that comprises a screw forming part of the circuit, and storage accessible to the at least one processor. The storage includes instructions executable by the at least one processor to determine that the screw has been removed from the circuit and to take at least one action related to unauthorized access to the device based on the determination.

The at least one action may include writing, to device memory, an indication that the screw has been removed from the circuit. Additionally or alternatively, the at least one action may include presenting, on a display, a graphical indication that the screw has been removed from the circuit. Still further, the device may be a first device and the at least one action may include transmitting a message to a second device that the screw has been removed from the circuit, where the second device is different from the first device.

Still further, the at least one action may include encrypting a hard drive on the device. The at least one action may also include transmitting a message to a registered user of the device that the device's security has been compromised and/or that the device has been tampered with.

If desired, in some example implementations the instructions may be executable to determine that screw has been removed from circuit based on detecting a state change in the circuit to incomplete.

Still further, in some examples the screw while forming part of the circuit may couple at least one component other than the circuit to the device. So, for example, the at least one component may include at least a portion of a housing of the device and/or a motherboard.

In another aspect, a method includes determining, at a device and using a processor, that a screw forming part of an electrical circuit within the device has been removed from the electrical circuit. The method also includes taking at least one action at the device related to the screw being removed based on the determining, where the at least one action is taken using the processor.

In some example implementations, the at least one action may include writing, to a predetermined storage location, an indication that the screw has been removed. For example, the predetermined storage location may form part of read-only memory (ROM) such as electrically erasable programmable read-only memory (EEPROM). As another example, the predetermined storage location may form part of write-only memory where data may be writable to the write-only memory by an embedded controller that performs the determining step. The write-only memory may not be readable by a central processing unit (CPU) in the device that is different from the embedded controller.

Additionally, in some example implementations the at least one action may include transmitting a message to a registered user of the device that the device has been tampered with, and/or transmitting a message to a manufacturer or provider of the device that the device has been tampered with.

Still further, in some examples the method may include using an embedded controller within the device to determine that the screw has been removed from the electrical circuit. In these examples, the embedded controller may be different from a central processing unit (CPU) of the device but may still establish the processor.

In still another aspect, at least one computer readable storage medium (CRSM) that is not a transitory signal may include instructions executable by at least one processor to determine, at a device, that a screw forming part of an electrical circuit within the device has been removed from the electrical circuit. The instructions may then be executable to take at least one action at the device to indicate device tampering based on the determination.

In some example implementations, the CRSM may form part of read-only memory (ROM) accessible to the at least one processor and the at least one processor may include an embedded controller different from a central processing unit (CPU) of the device.

The details of present principles, both as to their structure and operation, can best be understood in reference to the accompanying drawings, in which like reference numerals refer to like parts, and in which:

### BRIEF DESCRIPTION OF THE DRAWINGS

Figure 1 is a block diagram of an example system consistent with present principles;
Figure 2 is a block diagram of an example network of devices communicating consistent with present principles;
Figures 3-5 show example circuit diagrams consistent with present principles;
Figure 6 shows a side elevational view of an example circuit within a device consistent with present principles;
Figure 7 is a flow chart of an example algorithm that may be executed by a device consistent with present principles;
Figures 8 and 9 show example graphical indications and/or messages that may be presented on a display responsive to detection of device tampering consistent with present principles; and
Figure 10 shows an example graphical user interface (GUI) that may be presented on a display for a user to configure one or more settings of a device to operate consistent with present principles.

### DETAILED DESCRIPTION

Among other things, the present application discloses a tamper detection circuit in series with a chassis screw or other screw. Removal of the screw may break an electrical circuit, thereby eliminating unnecessary device complexity while still monitoring device tampering and possibly taking one or more actions based on screw removal. The device may be monitored for tampering even if the device is turned off, in hibernation, or sleeping owing to power still being accessible to the circuit via an external power supply or the device's battery (e.g., even if the battery is "drained" "all the way" since a computer battery may still maintain a reserve charge not indicated to the user).

Prior to delving further into the details of the instant techniques, note with respect to any computer systems discussed herein that a system may include server and client components, connected over a network such that data may be exchanged between the client and server components. The client components may include one or more computing devices including televisions (e.g., smart TVs, Internet-enabled TVs), computers such as desktops, laptops and tablet computers, so-called convertible devices (e.g., having a tablet configuration and laptop configuration), and other mobile devices including smart phones. These client devices may employ, as non-limiting examples, operating systems from Apple Inc. of Cupertino CA, Google Inc. of Mountain View, CA, or Microsoft Corp. of Redmond, WA. A Unix^{®} or similar such as Linux^{®} operating system may be used. These operating systems can execute one or more browsers such as a browser made by Microsoft or Google or Mozilla or another browser program that can access web pages and applications hosted by Internet servers over a network such as the Internet, a local intranet, or a virtual private network.

As used herein, instructions refer to computer-implemented steps for processing information in the system. Instructions can be implemented in software, firmware or hardware, or combinations thereof and include any type of programmed step undertaken by components of the system; hence, illustrative components, blocks, modules, circuits, and steps are sometimes set forth in terms of their functionality.

A processor may be any general purpose single- or multi-chip processor that can execute logic by means of various lines such as address lines, data lines, and control lines and registers and shift registers. Moreover, any logical blocks, modules, and circuits described herein can be implemented or performed with a general purpose processor, a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can also be implemented by a controller or state machine or a combination of computing devices. Thus, the methods herein may be implemented as software instructions executed by a processor, suitably configured application specific integrated circuits (ASIC) or field programmable gate array (FPGA) modules, or any other convenient manner as would be appreciated by those skilled in those art. Where employed, the software instructions may also be embodied in a non-transitory device that is being vended and/or provided that is not a transitory, propagating signal and/or a signal per se (such as a hard disk drive, CD ROM or Flash drive). The software code instructions may also be downloaded over the Internet. Accordingly, it is to be understood that although a software application for undertaking present principles may be vended with a device such as the system 100 described below, such an application may also be downloaded from a server to a device over a network such as the Internet.

Software modules and/or applications described by way of flow charts and/or user interfaces herein can include various sub-routines, procedures, etc. Without limiting the disclosure, logic stated to be executed by a particular module can be redistributed to other software modules and/or combined together in a single module and/ or made available in a shareable library.

Logic when implemented in software, can be written in an appropriate language such as but not limited to hypertext markup language (HTML)-5, Java^{®}/JavaScript, C# or C++, and can be stored on or transmitted from a computer-readable storage medium such as a random access memory (RAM), read-only memory (ROM), electrically erasable programmable read-only memory (EEPROM), a hard disk drive or solid state drive, compact disk read-only memory (CD-ROM) or other optical disk storage such as digital versatile disc (DVD), magnetic disk storage or other magnetic storage devices including removable thumb drives, etc.

In an example, a processor can access information over its input lines from data storage, such as the computer readable storage medium, and/or the processor can access information wirelessly from an Internet server by activating a wireless transceiver to send and receive data. Data typically is converted from analog signals to digital by circuitry between the antenna and the registers of the processor when being received and from digital to analog when being transmitted. The processor then processes the data through its shift registers to output calculated data on output lines, for presentation of the calculated data on the device.

Components included in one embodiment can be used in other embodiments in any appropriate combination. For example, any of the various components described herein and/or depicted in the Figures may be combined, interchanged or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

The term "circuit" or "circuitry" may be used in the summary, description, and/or claims. As is well known in the art, the term "circuitry" includes all levels of available integration, e.g., from discrete logic circuits to the highest level of circuit integration such as VLSI, and includes programmable logic components programmed to perform the functions of an embodiment as well as general-purpose or special-purpose processors programmed with instructions to perform those functions.

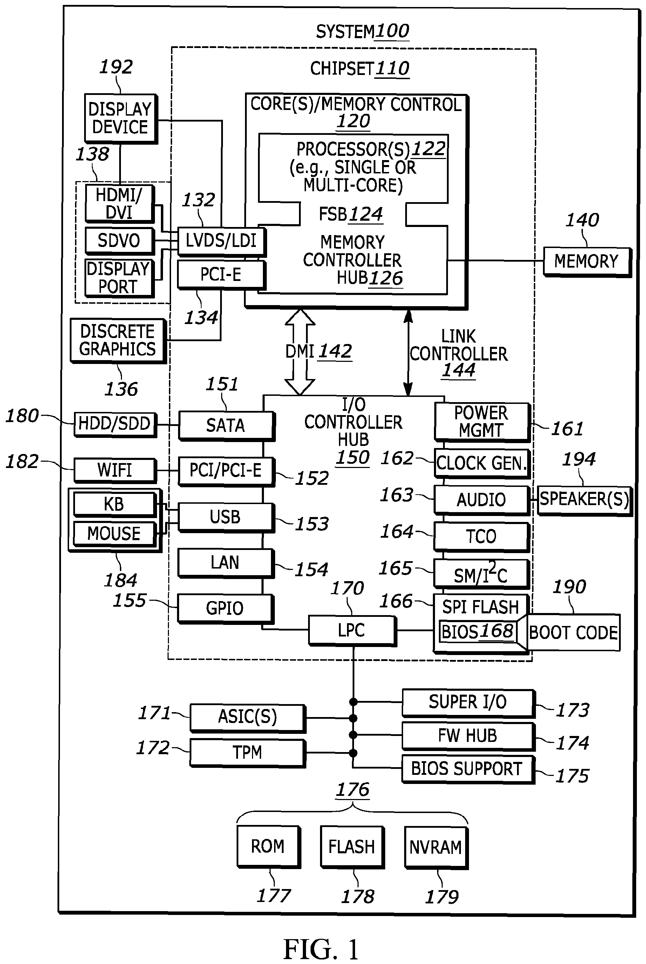

Now specifically in reference to Figure 1, an example block diagram of an information handling system and/or computer system 100 is shown that is understood to have a housing for the components described below. Note that in some embodiments the system 100 may be a desktop computer system, such as one of the ThinkCentre^{®} or ThinkPad^{®} series of personal computers sold by Lenovo (US) Inc. of Morrisville, NC, or a workstation computer, such as the ThinkStation^{®}, which are sold by Lenovo (US) Inc. of Morrisville, NC; however, as apparent from the description herein, a client device, a server or other machine in accordance with present principles may include other features or only some of the features of the system 100. Also, the system 100 may be, e.g., a game console such as XBOX^{®}, and/or the system 100 may include a mobile communication device such as a mobile telephone, notebook computer, and/or other portable computerized device.

As shown in Figure 1, the system 100 may include a so-called chipset 110. A chipset refers to a group of integrated circuits, or chips, that are designed to work together. Chipsets are usually marketed as a single product (e.g., consider chipsets marketed under the brands INTEL^{®}, AMD^{®}, etc.).

In the example of Figure 1, the chipset 110 has a particular architecture, which may vary to some extent depending on brand or manufacturer. The architecture of the chipset 110 includes a core and memory control group 120 and an I/O controller hub 150 that exchange information (e.g., data, signals, commands, etc.) via, for example, a direct management interface or direct media interface (DMI) 142 or a link controller 144. In the example of Figure 1, the DMI 142 is a chip-to-chip interface (sometimes referred to as being a link between a "northbridge" and a "southbridge").

The core and memory control group 120 include one or more processors 122 (e.g., single core or multi-core, etc.) and a memory controller hub 126 that exchange information via a front side bus (FSB) 124. As described herein, various components of the core and memory control group 120 may be integrated onto a single processor die, for example, to make a chip that supplants the "northbridge" style architecture.

The memory controller hub 126 interfaces with memory 140. For example, the memory controller hub 126 may provide support for DDR SDRAM memory (e.g., DDR, DDR2, DDR3, etc.). In general, the memory 140 is a type of random-access memory (RAM). It is often referred to as "system memory."

The memory controller hub 126 can further include a low-voltage differential signaling interface (LVDS) 132. The LVDS 132 may be a so-called LVDS Display Interface (LDI) for support of a display device 192 (e.g., a CRT, a flat panel, a projector, a touch-enabled light emitting diode display or other video display, etc.). A block 138 includes some examples of technologies that may be supported via the LVDS interface 132 (e.g., serial digital video, HDMI/DVI, display port). The memory controller hub 126 also includes one or more PCI-express interfaces (PCI-E) 134, for example, for support of discrete graphics 136. Discrete graphics using a PCI-E interface has become an alternative approach to an accelerated graphics port (AGP). For example, the memory controller hub 126 may include a 16-lane (x16) PCI-E port for an external PCI-E-based graphics card (including, e.g., one of more GPUs). An example system may include AGP or PCI-E for support of graphics.

In examples in which it is used, the I/O hub controller 150 can include a variety of interfaces. The example of Figure 1 includes a SATA interface 151, one or more PCI-E interfaces 152 (optionally one or more legacy PCI interfaces), one or more USB interfaces 153, a LAN interface 154 (more generally a network interface for communication over at least one network such as the Internet, a WAN, a LAN, a Bluetooth network using Bluetooth 5.0 communication, etc. under direction of the processor(s) 122), a general purpose I/O interface (GPIO) 155, a low-pin count (LPC) interface 170, a power management interface 161, a clock generator interface 162, an audio interface 163 (e.g., for speakers 194 to output audio), a total cost of operation (TCO) interface 164, a system management bus interface (e.g., a multi-master serial computer bus interface) 165, and a serial peripheral flash memory/controller interface (SPI Flash) 166, which, in the example of Figure 1, includes basic input/output system (BIOS) 168 and boot code 190. With respect to network connections, the I/O hub controller 150 may include integrated gigabit Ethernet controller lines multiplexed with a PCI-E interface port. Other network features may operate independent of a PCI-E interface.

The interfaces of the I/O hub controller 150 may provide for communication with various devices, networks, etc. For example, where used, the SATA interface 151 provides for reading, writing or reading and writing information on one or more drives 180 such as HDDs, SDDs or a combination thereof, but in any case the drives 180 are understood to be, e.g., tangible computer readable storage mediums that are not transitory, propagating signals. The I/O hub controller 150 may also include an advanced host controller interface (AHCI) to support one or more drives 180. The PCI-E interface 152 allows for wireless connections 182 to devices, networks, etc. The USB interface 153 provides for input devices 184 such as keyboards (KB), mice and various other devices (e.g., cameras, phones, storage, media players, etc.).

In the example of Figure 1, the LPC interface 170 provides for use of one or more ASICs 171, a trusted platform module (TPM) 172, a super I/O 173, a firmware hub 174, BIOS support 175 as well as various types of memory 176 such as ROM 177 (e.g., electrically erasable programmable read-only memory (EEPROM)), write-only memory, Flash 178, and non-volatile RAM (NVRAM) 179. With respect to the TPM 172, this module may be in the form of a chip that can be used to authenticate software and hardware devices. For example, a TPM may be capable of performing platform authentication and may be used to verify that a system seeking access is the expected system.

The system 100, upon power on, may be configured to execute boot code 190 for the BIOS 168, as stored within the SPI Flash 166, and thereafter processes data under the control of one or more operating systems and application software (e.g., stored in system memory 140). An operating system may be stored in any of a variety of locations and accessed, for example, according to instructions of the BIOS 168.

Additionally, though not shown for simplicity, in some embodiments the system 100 may include a gyroscope that senses and/or measures the orientation of the system 100 and provides related input to the processor 122, as well as an accelerometer that senses acceleration and/or movement of the system 100 and provides related input to the processor 122. Still further, the system 100 may include an audio receiver/microphone that provides input from the microphone to the processor 122 based on audio that is detected, such as via a user providing audible input to the microphone. The system 100 may also include a camera that gathers one or more images and provides images and related input to the processor 122. The camera may be a thermal imaging camera, an infrared (IR) camera, a digital camera such as a webcam, a three-dimensional (3D) camera, and/or a camera otherwise integrated into the system 100 and controllable by the processor 122 to gather pictures/images and/or video. Also, the system 100 may include a global positioning system (GPS) transceiver that is configured to communicate with at least one satellite to receive/identify geographic position information and provide the geographic position information to the processor 122. However, it is to be understood that another suitable position receiver other than a GPS receiver may be used in accordance with present principles to determine the location of the system 100.

It is to be understood that an example client device or other machine/computer may include fewer or more features than shown on the system 100 of Figure 1. In any case, it is to be understood at least based on the foregoing that the system 100 is configured to undertake present principles.

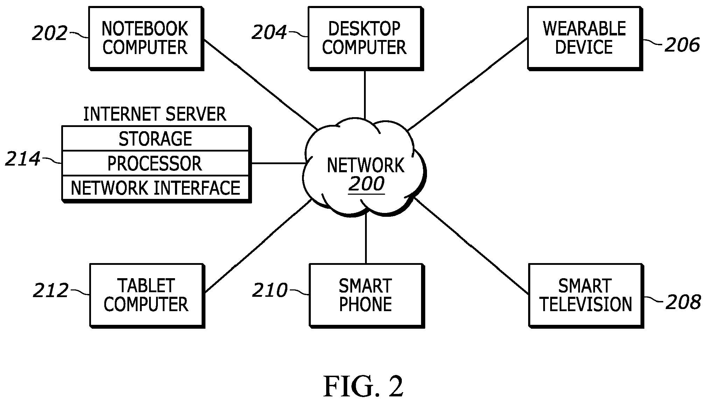

Turning now to Figure 2, example devices are shown communicating over a network 200 such as the Internet in accordance with present principles (e.g., to transmit messages regarding device tampering). It is to be understood that each of the devices described in reference to Figure 2 may include at least some of the features, components, and/or elements of the system 100 described above. Indeed, any of the devices disclosed herein may include at least some of the features, components, and/or elements of the system 100 described above.

Figure 2 shows a notebook computer and/or convertible computer 202, a desktop computer 204, a wearable device 206 such as a smart watch, a smart television (TV) 208, a smart phone 210, a tablet computer 212, and a server 214 such as an Internet server that may provide cloud storage accessible to the devices 202-212. It is to be understood that the devices 202-214 may be configured to communicate with each other over the network 200 to undertake present principles.

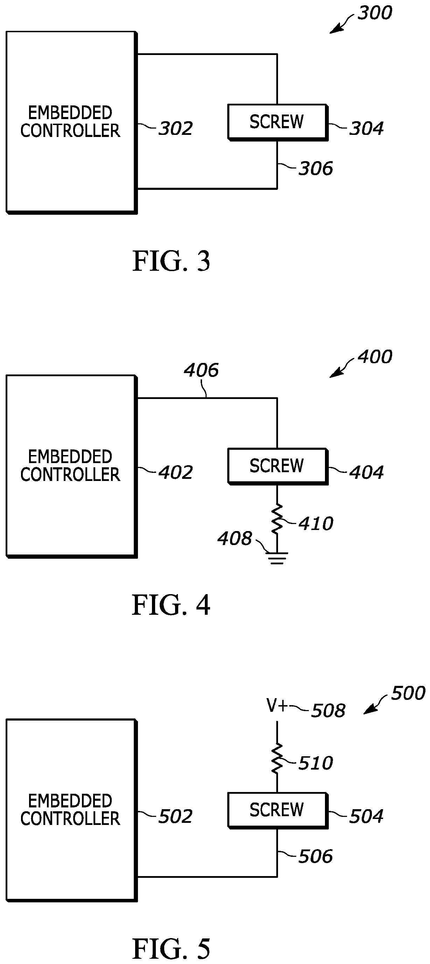

Now describing Figure 3, it shows an example electrical circuit 300 consistent with present principles. The circuit 300 may be located inside of a computer, such as one of the devices 202-212 or the system 100 described above. For example, the circuit 300 may be mounted to or contained on a system board within the computer (such as the computer's motherboard).

As shown in Figure 3, a screw 304 forms part of an electrical path 306 in the circuit 300 through which electrical current may travel. As also shown, the path 306 goes through an embedded controller 302 such as a microprocessor, tamper detection circuit (e.g., another circuit within the circuit 300), or other hardware element that may monitor current/voltage within the circuit 300 and have its own memory. Thus, should the screw 304 be removed from the circuit 300, the controller 302 may sense a state change of current within the circuit 300 going to zero, which may then trigger one or more actions by the controller 302 as will be described later.

However, first reference is made to Figure 4. This figure shows another example electrical circuit 400 consistent with present principles that may be located within a computer. In Figure 4, rather than a closed-loop circuit like in Figure 3, the circuit 400 is configured for current to flow from a power supply (not shown) through embedded controller 402 (that may be similar to the controller 302) and through screw 404 that forms part of an electrical path 406 to ground 408. If desired, in series and between the screw 404 and ground 408 may be a 4.7k ohm resistor or other suitable resistor 410 to regulate or limit current flow to ground 408. Thus, here again should the screw 404 be removed from the circuit 400, the controller 402 may sense current within the circuit 400 going to zero since current can no longer flow from the controller 402 to ground through the path 406, which may then trigger one or more actions by the controller 402 as will be described later.

Figure 5 shows yet another example circuit 500 that may be located within a computer consistent with present principles. In Figure 5, the circuit 500 is configured for current to flow from positive power supply pin 508, through a screw 504 that forms part of an electrical path 506 to embedded controller 502 (that may be similar to the controller 302) for current to flow to the controller 502 from the pin 508. Again note that a 4.7k ohm resistor or other suitable resistor 510 may also be placed in series on the path 506, between the screw 504 and pin 508. Thus, here too should the screw 504 be removed from the circuit 500, the controller 502 may sense current within the circuit 500 going to zero since power from the pin 508 can no longer be received by the controller 502 over the path 506, which may then trigger one or more actions by the controller 502 as will be described later.

Before moving on to the description of other figures, note that the circuits of Figures 3-5 are examples and that other circuit components and paths may be included that are not actually shown in Figures 3-5 for simplicity. E.g., the circuit 500 may include a path to ground.

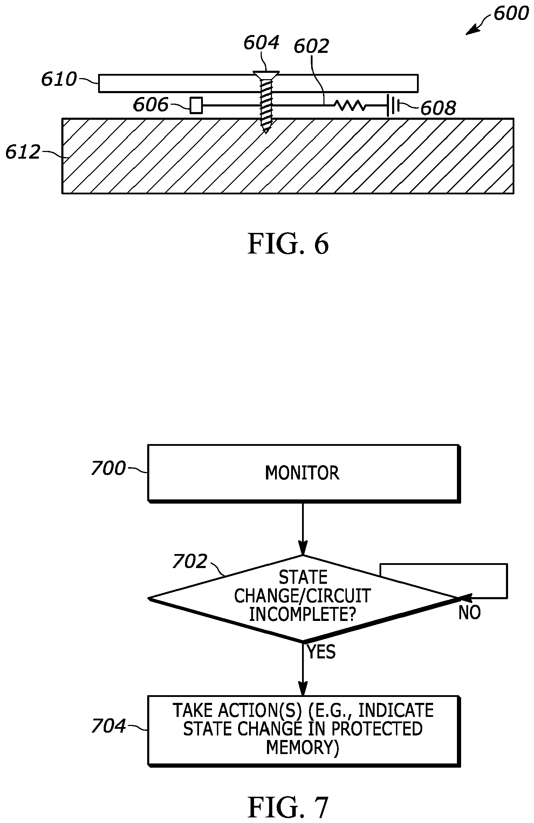

Continuing the detailed description now in reference to Figure 6, it shows a side elevational view of an example circuit 602 within part of a device 600 consistent with present principles. As shown, a screw 604 forms part of the path of the circuit 602 from an embedded controller 606 to ground 608 similar to as shown in Figure 4, with it being further noted that other circuit configurations may also be used in other examples (such as those described in reference to Figures 3 and 5).

As also shown in Figure 6, the screw 604 may secure a motherboard 610 or different system component (e.g., battery) to an interior side of a housing 612 of the device 600 (or secure it to another system component). This may be done via the screw 604 being screwed in through aligned, threaded holes in the components 610, 612. However, also note that in other examples the screw may be accessible from the exterior of the device and still complete the circuit, such as if battery pack decoupling from the exterior housing/chassis of the device were to be detected or if removal of one part of the housing or chassis from another part of the housing or chassis were to be detected. Regardless, the screw itself may be a Phillips screw as shown but may also be a flathead or other screw type and may have its own threads along the shaft for screwing into the threaded holes in the components 610, 612.

According to the present example, while the screw 604 is screwed in to extend through the aligned holes to couple the motherboard 610 to the housing 612, the screw also forms part of the electrical path of the circuit 602 for current to flow from the controller 606 to ground 608. Thus, should someone remove the screw 604 from the aligned holes (e.g., unscrew it) to detach or loosen the motherboard 610 from the housing 612, the path on the circuit 600 may break and the broken path may be sensed by the controller 606 since current from the controller 606 is no longer being discharged to ground through the screw 604.

Example logic that may be executed by one of the example embedded controllers described in reference to Figures 3-6 will now be discussed. Accordingly, reference is made to Figure 7 which shows example logic that may be executed by an embedded controller or other processor within a device such as the system 100 consistent with present principles. Note that while the logic is shown in flowchart format, state logic may also be used. In any case, beginning at block 700, the controller may begin continually or periodically monitoring for current or voltage loss along a current path including a screw. The logic may then move to decision diamond 702 where the controller may determine whether a state change has been detected in the circuit, such as the loss of current or voltage owing to the circuit becoming broken, short-circuited, or incomplete based on screw removal. A negative determination may cause the logic to continue executing decision diamond 702 until an affirmative determination is made.

Then responsive to an affirmative determination, as shown in Figure 7 the logic may proceed from diamond 702 to block 704. At block 704 the controller may, by itself or in conjunction with another processor such as the device's central processing unit (CPU), take one or more actions responsive to the affirmative determination. For example, at block 704 the controller may write an indication of the state change in memory of the device, such as read-only memory (ROM) and even electrically erasable programmable read-only memory (EEPROM) specifically (e.g., electrically alterable read-only memory (EAROM) or flash memory). Additionally or alternatively, the controller may write an indication to another predetermined storage location such as write-only memory within the device, where data may be writable to the write-only memory by the embedded controller but may not be readable by the CPU or other processors in the device. The ROM or write-only memory may be part of the embedded controller itself or may be ROM or write-only memory located elsewhere within the device.

A technician or system administrator may then access the ROM or write-only memory at a later time to identify the indication from the memory and take appropriate steps if desired since the indication may by itself indicate tampering with the device via screw removal. The indication as written may be established by a simple zero or one being entered at the predetermined memory location, or a predetermined bit pattern or byte pattern being written, which in either case might seem random or meaningless to the unknowing observer but provides a cue to a technician or system administrator that knows to look for it that device tampering has occurred. In some examples, the indication may also be encrypted as stored at the predetermined storage location, also for security.

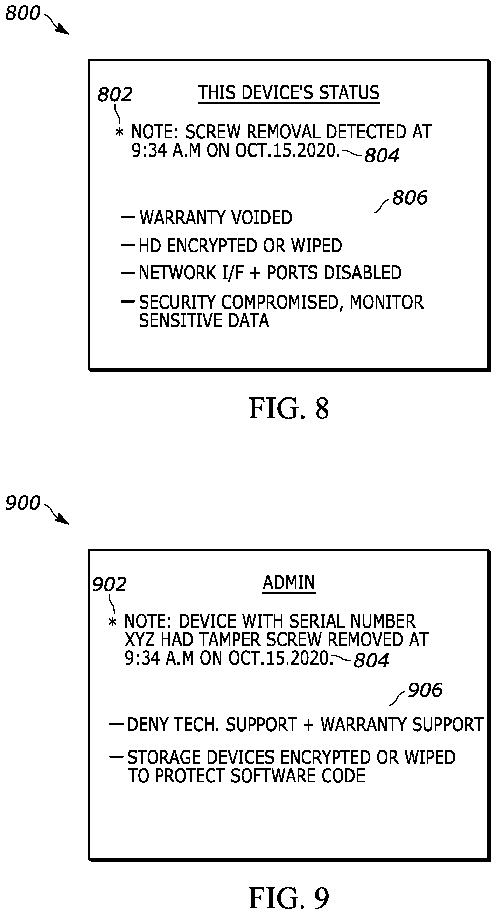

Other example actions that may be executed at block 704 will now be discussed in reference to Figures 8-10. For example, as shown in Figure 8 an example graphical user interface (GUI) 800 may be presented on the display of a device for which a screw has been removed consistent with present principles. Additionally or alternatively, the GUI 800 may be presented on the display of another device associated with a registered end-user of the device for which the screw was removed. So, for example, the GUI 800 may present an email, short message service (SMS) message, or other electronic message type that was received at an electronic message account for the registered user and/or received at the other device itself that is associated with the registered user.

As shown in Figure 8, the GUI 800 may include one or more graphical indications that a screw has been removed from a circuit of one of the devices associated with the end user. In this case, the graphical indications may include a non-text icon 802 and text 804. As shown, the non-text icon 802 may include a star or other icon already associated with device tampering for the user to know it connotes device tampering upon seeing it. As also shown, the text 804 may indicate that screw removal was detected at 9:34 a.m. local time on October 15, 2020.

Based on the screw being removed, the GUI 800 may list actions 806 that were taken by the device from which the screw was removed as a result. In the present instance, those actions 806 include notifying the device's manufacturer that the warranty for the device should be voided (if the warranty is still in effect), and encrypting the hard drive and/or other storage within the device responsive to screw removal to protect sensitive data.

Additionally, the actions 806 may include certain hardware on the device being disabled and/or turned off, such as any and all network interface cards (e.g., Wi-Fi transceivers) and hardware ports (e.g., ethernet ports and universal serial bus (USB) ports) being turned off. This may be useful so that a hacker or other person with nefarious intent cannot connect another device to the user's device in order to "jailbreak" the device or otherwise access sensitive data stored thereon. Yet another example action 806 shown on the GUI 800 is instructing the user to monitor sensitive data, e.g., on the dark web using a credit monitoring service or antivirus service.

Also note that while according to Figure 8 itself the GUI 800 is assumed to be presented on the display of the same device from which the screw was removed, in other examples where the GUI 800 presents a received message based on the screw being removed from another device then the text indication 804 may also explicitly indicate the other device by name or device type (e.g., "your Lenovo smartphone") or even serial number, media access control (MAC) address, or Internet protocol (IP) address.

Continuing the detailed description in reference to Figure 9, it shows another example GUI 900 that may be presented on a display responsive to a screw being removed from a circuit consistent with present principles. In this example, however, the GUI 900 is not presented on the display of the device itself that had the screw removed but rather on the display of a different device associated with a manufacturer, technician or provider of the device from which the screw was removed. For example, the GUI 900 may indicate an email, SMS, or other message received at a server or other device for the device's manufacturer.

As shown in Figure 9, the GUI 900 may include graphical indications such as a non-text icon 902 and text 904. As shown, the non-text icon 902 may include a star or other icon already associated with device tampering for the manufacturer or system administrator to know it connotes device tampering upon seeing it. As also shown, the text 904 may indicate that screw removal for a given device having a particular serial number XYZ was detected at 9:34 a.m. on October 15, 2020.

Based on the screw being removed, the GUI 900 may list actions 906 that were or are to be taken as a result. In the present instance, those actions 906 include instructions to the manufacturer, system administrator, or technician that technical support and warranty support for the end-user's device should be denied since the end-user's device is assumed to have been tampered with based on the screw removal.

In addition to indicating instructions for the manufacturer, the actions 906 may also indicate actions that were already taken at the end-user's device itself, e.g., based on preprogrammed software instructions to do so. For instance, storage devices including flash memory, hard drives (e.g., both hard disk drives and solid state drives), and other storage areas may have either been encrypted or "wiped" to protect not only the end-user's data from hackers and exposure but also to protect proprietary software code and other sensitive data placed on the end-user's device by the manufacturer itself. "Wiping" may include reformatting the storage area so that it contains no data, or otherwise deleting some or all data from the storage area.

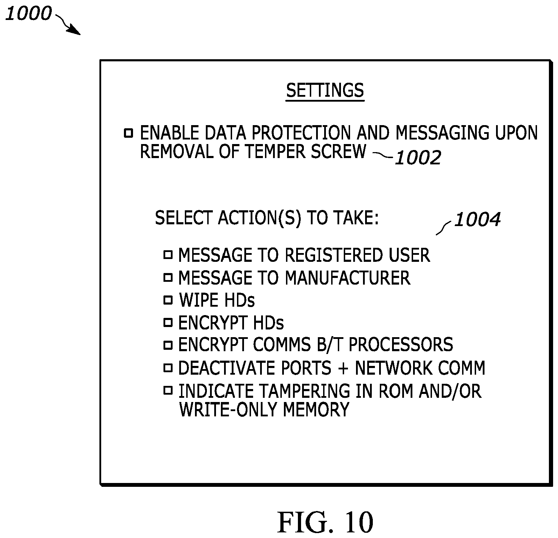

Reference is now made to Figure 10, which shows an example GUI 1000 that may be presented on the display of a device that includes a circuit with a screw as described herein. The GUI 1000 may be presented for configuring one or more settings of the device to operate consistent with present principles. In the present example, each setting may be selected by directing touch or cursor input to the associated check box adjacent to each respective setting.

As shown in Figure 10, the GUI 1000 may include a first setting 1002 that may be selectable to set or configure the device to undertake present principles. For example, the setting 1002 may be selected to set or enable the device to in the future undertake the logic of Figure 7 and/or to take one or more actions responsive to detecting a screw being removed from a circuit within the device as described herein.

As also shown in Figure 10, the GUI 1000 may include one or more other settings 1004 for selecting respective particular actions that the device is to take responsive to detecting screw removal from a circuit. Any actions discussed herein may be presented as one of the settings 1004, but in the present example those actions include sending a message to a registered user of the device, sending a message to a manufacturer of the device, "wiping" or deleting the device's hard drives, encrypting the device's hard drives, and encrypting any and all communications between different processors within the device itself (e.g., so that communications are not intercepted by the hacker when traveling from processor to processor within the device). Other example actions include deactivating ports on the device and network communication with other devices, and indicating device tampering in the device's ROM and/or write-only memory.

It may now be appreciated that present principles provide for an electronic, computer-based approach that aids the functionality and security of the devices disclosed herein. The disclosed concepts are rooted in computer technology.

It is to be understood that whilst present principals have been described with reference to some example embodiments, these are not intended to be limiting, and that various alternative arrangements may be used to implement the subject matter claimed herein. Components included in one embodiment can be used in other embodiments in any appropriate combination. For example, any of the various components described herein and/or depicted in the Figures may be combined, interchanged or excluded from other embodiments.

Further aspects of the invention are provided by the subject matter of the following clauses:
A device, comprising: at least one processor; a circuit that comprises a screw forming part of the circuit; and storage accessible to the at least one processor and comprising instructions executable by the at least one processor to: determine that the screw has been removed from the circuit; and based on the determination, take at least one action related to unauthorized access to the device.

The device of any preceding clause, wherein the at least one action comprises writing, to device memory, an indication that the screw has been removed from the circuit.

The device of any preceding clause, wherein the at least one action comprises presenting, on a display, a graphical indication that the screw has been removed from the circuit.

The device of any preceding clause, wherein the device is a first device, and wherein the at least one action comprises transmitting a message to a second device that the screw has been removed from the circuit, wherein the second device is different from the first device.

The device of any preceding clause, wherein the at least one action comprises encrypting a hard drive on the device.

The device of any preceding clause, wherein the at least one action comprises transmitting a message to a registered user of the device that the device's security has been compromised and/or that the device has been tampered with.

The device of any preceding clause, wherein the instructions are executable to: determine that screw has been removed from circuit based on detecting a state change in the circuit to incomplete.

The device of any preceding clause, wherein the screw while forming part of the circuit couples at least one component other than the circuit to the device.

The device of any preceding clause, wherein the at least one component comprises at least a portion of a housing of the device.

The device of any preceding clause, wherein the at least one component comprises a motherboard.

A method, comprising: determining, at a device and using a processor, that a screw forming part of an electrical circuit within the device has been removed from the electrical circuit; and based on the determining, taking at least one action at the device related to the screw being removed, the at least one action taken using the processor.

The method of any preceding clause, wherein the at least one action comprises writing, to a predetermined storage location, an indication that the screw has been removed.

The method of any preceding clause, wherein the predetermined storage location forms part of read-only memory (ROM).

The method of any preceding clause, wherein the ROM is electrically erasable programmable read-only memory (EEPROM).

The method of any preceding clause, wherein the predetermined storage location forms part of write-only memory, data being writable to the write-only memory by an embedded controller that performs the determining step, the write-only memory not being readable by a central processing unit (CPU) in the device that is different from the embedded controller.

The method of any preceding clause, wherein the at least one action comprises transmitting a message to a registered user of the device that the device has been tampered with.

The method of any preceding clause, wherein the at least one action comprises transmitting a message to a manufacturer or provider of the device that the device has been tampered with.

The method of any preceding clause, comprising: using an embedded controller within the device to determine that the screw has been removed from the electrical circuit, the embedded controller being different from a central processing unit (CPU) of the device, the embedded controller establishing the processor.

At least one computer readable storage medium (CRSM) that is not a transitory signal, the computer readable storage medium comprising instructions executable by at least one processor to: determine, at a device, that a screw forming part of an electrical circuit within the device has been removed from the electrical circuit; and based on the determination, take at least one action at the device to indicate device tampering.

The CRSM of any preceding clause, wherein the CRSM forms part of read-only memory (ROM) accessible to the at least one processor, and wherein the at least one processor comprises an embedded controller different from a central processing unit (CPU) of the device.

## Claims

1. A device, comprising:
at least one processor;
a circuit that comprises a screw forming part of the circuit; and
storage accessible to the at least one processor and comprising instructions executable by the at least one processor to:
determine that the screw has been removed from the circuit; and
based on the determination, take at least one action related to unauthorized access to the device.

2. The device of claim 1, wherein the at least one action comprises writing, to device memory, an indication that the screw has been removed from the circuit.

3. The device of claim 1 or 2, wherein the at least one action comprises presenting, on a display, a graphical indication that the screw has been removed from the circuit.

4. The device of any preceding claim, wherein the device is a first device, and wherein the at least one action comprises transmitting a message to a second device that the screw has been removed from the circuit, wherein the second device is different from the first device.

5. The device of any preceding claim, wherein the at least one action comprises encrypting a hard drive on the device.

6. The device of any preceding claim, wherein the at least one action comprises transmitting a message to a registered user of the device that the device's security has been compromised and/or that the device has been tampered with.

7. The device of any preceding claim, wherein the instructions are executable to:
determine that screw has been removed from circuit based on detecting a state change in the circuit to incomplete.

8. The device of any preceding claim, wherein the screw while forming part of the circuit couples at least one component other than the circuit to the device.

9. The device of claim 8, wherein the at least one component comprises at least a portion of a housing of the device.

10. The device of claim 8, wherein the at least one component comprises a motherboard.

11. A method, comprising:
determining, at a device and using a processor, that a screw forming part of an electrical circuit within the device has been removed from the electrical circuit; and
based on the determining, taking at least one action at the device related to the screw being removed, the at least one action taken using the processor.

12. The method of Claim 11, wherein the at least one action comprises writing, to a predetermined storage location, an indication that the screw has been removed.

13. The method of Claim 12, wherein the predetermined storage location forms part of read-only memory (ROM).

14. The method of Claim 13, wherein the ROM is electrically erasable programmable read-only memory (EEPROM).

15. At least one computer readable storage medium (CRSM) that is not a transitory signal, the computer readable storage medium comprising instructions executable by at least one processor to:
determine, at a device, that a screw forming part of an electrical circuit within the device has been removed from the electrical circuit; and
based on the determination, take at least one action at the device to indicate device tampering.
